# EUROPÄISCHE PATENTSCHRIFT

(11) **EP 1 596 517 B1**
(45) Veröffentlichungstag und Bekanntmachung des Hinweises auf die Patenterteilung: **05.03.2008**
(21) Anmeldenummer: 04011104.9
(22) Anmeldetag: 10.05.2004
(51) Int. Cl.: H04L 1/00, G06F 11/16

(54) **Verfahren zur einkanaligen Übertragung von redundant vorliegenden Daten**
Method of transmission of redundantly provided data over a single channel
Procédé de transmission sur un seul canal de données fournies sous forme redondante

(43) Veröffentlichungstag der Anmeldung: 16.11.2005
(73) Patentinhaber: SIEMENS AKTIENGESELLSCHAFT, 80333 München (DE)
(72) Erfinder: Barthel, Herbert, 91074 Herzogenaurach (DE); Schiller, Frank, Dr., 90408 Nürnberg (DE); Sigwart, Edgar, 92224 Amberg (DE)

(56) Entgegenhaltungen:
- DE-A- 4 107 639
- DE-A- 19 532 639
- DE-A- 19 833 867

## Beschreibung

Die Erfindung betrifft ein Verfahren und ein System zur einkanaligen Übertragung von Informationen auf einem Bussystem, wobei die zu übertragenden Informationen Nettodaten beinhalten, die zweikanalig in Form einer ersten Datenmenge und in Form einer zweiten, zumindest in der Darstellungsform von der ersten Datenmenge verschiedenartigen Datenmenge vorliegen.

Ein derartiges System bzw. Verfahren kommt zum Beispiel in industriellen Automatisierungssystemen zum Einsatz, in denen sicherheitsrelevante Daten geführt werden.

Bekannte fehlersichere Systeme werden unter anderem in Normen wie z. B. der IEC 61508 "Functional Safety of Electrical/ Electronic/Programmable Electronic Safety-Related Systems" beschrieben. Nach IEC 61508 müssen in einem fehlersicheren Automatisierungssystem Maßnahmen zur Fehlervermeidung und Fehlerbeherrschung entsprechend eines Sicherheitslevels, des Safety Integrity Level (SIL), getroffen werden.

Zur Übertragung sicherheitsrelevanter Daten auf einem Bussystem wird ein Telegramm generiert, welches neben den reinen zu übertragenden Nettodaten auch eine Prüfsumme enthält, anhand derer ein Empfänger die übertragenen Nettodaten auf eventuelle Fehler überprüfen kann. Die Prüfsumme muss immer zu den Nettodaten passen. Liegt diese Übereinstimmung nicht vor, so signalisiert dies dem Empfänger, dass ein Fehler aufgetreten ist. Zur Generierung der Prüfsumme wird beispielsweise der sogenannte Cyclic Redundancy Check (CRC) durchgeführt.

Um einen Sicherheitslevel von 2 nach IEC 61508 in einem Automatisierungssystem zu erreichen, werden alle sicherheitsrelevanten Daten, insbesondere IO-Daten, doppelt geführt. Zur Übertragung der Daten auf dem Bussystem wird gemäß dem Stand der Technik von einem zweikanaligen Kommunikationstreiber ein Telegramm generiert, bei dem die in beiden Kanälen vorliegenden Daten verwendet werden. Hierzu werden über einen Controller von einem der beiden Kanäle die Daten bereitgestellt und mittels eines zweiten Controllers anhand der Daten des anderen Kanals die Prüfsumme berechnet und bereitgestellt. Wenn die Daten den Kommunikationstreiber zum Bus hin verlassen, ist anhand des Telegrams ein in einem der beiden zueinander redundanten Controllern aufgetretener Fehler erkennbar, indem Prüfsumme und Nettodaten auf Übereinstimmung getestet werden. Auf diese Weise kann im Kommunikationsprotokoll der Sicherheitslevel 2 erreicht werden, obwohl die 2-kanaligen Daten nur auf einem hardwaretechnisch einkanaligen System erscheinen/vorliegen.

Aus der DE 41 07 639 A1 ist eine Einrichtung zur signaltechnisch sicheren Fernsteuerung einer Unterstation in einer Eisenbahnanlage bekannt, bei der der Vollzug einer ausgelösten Stellhandlung in regelmäßigen Abständen abgefragt wird. Das Abfrageergebnis wird von zwei Vorrechnern getrennt einem Unterstationsmodem zugeführt und als Meldedatentelegramm zu einer Zentralstation übertragen. Hierbei gibt einer der Vorrechner seine Daten in invertierter Form auf das Modem aus. In der Zentralstation empfangen zwei Rechnersysteme parallel die von beiden Rechnerkanälen der Unterstation übermittelten Meldedaten und führen einen Vergleich der einfach übertragenen Daten mit den invertiert übertragenen Daten durch.

Aus der DE 198 33 867 A1 ist ein Verfahren zur sicheren einkanaligen Übertragung von Daten zwischen den Rechnerknoten eines Rechnerverbundes bekannt. Bei dem Verfahren wird verhindert, dass ein Rechner, der über einen für die Kommunikation zwischen Rechnerknoten vorgesehenen Knoten externe Kommunikationskanalnutzdaten sendet, korrekte Redundanzdaten ermittelt.

Aus der DE 195 32 639 A1 ist eine Einrichtung zur einkanaligen Übertragung von aus zwei Datenquellen stammenden Daten bekannt. Die zu übermittelnden Daten bestehen aus Nutzdaten und Prüfdaten, die sich auf vorgegebene Art und Weise aus den Nutzdaten bestimmen lassen. Die übermittelten Nutz- und Prüfdaten stammen von unterschiedlichen Rechnern des Rechnersystems.

Der Erfindung liegt die Aufgabe zu Grunde, ein Verfahren und ein System anzugeben, mit dem eine dem Sicherheitslevel 2 nach IEC 61508 genügende Datenübertragung mit reduziertem Hardwareaufwand erreicht wird.
- Diese Aufgabe wird durch ein Verfahren nach Anspruch 1 gelöst.
- Diese Aufgabe wird weiter durch ein System nach Anspruch 5 gelöst.

Das erfindungsgemäße Verfahren ermöglicht die Generierung eines sicherheitsgerichteten Übertragungstelegramms mit nur einer Verarbeitungseinheit, wobei trotzdem der Sicherheitslevel 2 erreicht wird. Dies wird erreicht, indem die sicherheitsrelevanten Nettodaten bis zur Generierung des Telegramms nicht nur doppelt geführt werden, sondern auch auf zwei verschiedene Darstellungsarten. Wenn die Daten bis zur Telegrammgenerierung stets in zwei verschiedenen Darstellungsarten vorliegen, können sie auch in einer gemeinsamen Verarbeitungseinheit, beispielsweise einem Prozessor, gemeinsam geführt werden. Speicher- oder Abarbeitungsfehler (z. B. der Befehl "invertiere" invertiert an einer Bitstelle nicht) können durch die verschiedenartige Darstellungsform der Nettodaten erkannt werden, ohne dass für beide Darstellungsformen eine eigene Verarbeitungseinheit benötigt wird.

Zur Generierung des Übertragungstelegramms werden die Nettodaten durch die erste Datenmenge dargestellt und die Prüfsumme auf Basis der zweiten Datenmenge erzeugt. Das erfindungsgemäße Verfahren ermöglicht also die Prüfsummenbildung nach Sicherheitslevel 2 mit einer einkanaligen Hardware.

Eine vorteilhafte Ausführungsform des Verfahrens ist dadurch gekennzeichnet, dass eine der beiden Datenmengen einer bitweise invertierten Darstellung der Nettodaten entspricht und die Prüfsumme dadurch erzeugt wird, dass von den invertierten Nettodaten eine zweite Prüfsumme gebildet wird und diese mit einer Prüfsumme eines Bitstroms, in dem alle Bits auf 1 gesetzt sind und dessen Länge in Abhängigkeit der Nettodaten bestimmt wird, Exklusiv-Oder verknüpft wird.

Die zwei Darstellungsarten der zu übertragenden Nettodaten sind in dieser Ausführungsform dadurch gegeben, dass die Nettodaten einmal in normaler und einmal in invertierter Form geführt werden. Die Bildung der Prüfsumme der Nettodaten geschieht auf Basis der invertierten Daten. Hierzu wird zunächst eine Prüfsumme der invertierten Nettodaten gebildet. Weiterhin wird eine Prüfsumme eines Bitstroms berechnet, indem alle Bits auf 1 gesetzt sind und dessen Länge in Abhängigkeit der Länge der zu übertragenden Nettodaten bestimmt wird. Anschließend wird die Prüfsumme des Bitstromes mit der Prüfsumme der invertierten Nettodaten Exklusiv-Oder (XOR) verknüpft. Das Ergebnis dieser XOR-Verknüpfung ist schließlich die Prüfsumme der eigentlichen Nettodaten.

Diese Vorgehensweise hat den entscheidenden Vorteil, dass die doppelt geführten Nettodaten bis zur Generierung des Übertragungstelegramms niemals in der gleichen Darstellungsform innerhalb der Verarbeitungseinheit vorliegen. Würden beispielsweise zur Erzeugung der Prüfsumme der Nettodaten die invertierten Nettodaten invertiert und anschließend hieraus die Prüfsumme bestimmt, so würden die sicherheitsrelevanten Daten eine gewisse Zeit lang in beiden Kanälen in gleicher Form vorliegen. Eine Reihe möglicher Speicher- und Abarbeitungsfehler (z. B. der Befehl "invertiere" invertiert an einer Bit-Stelle nicht) kann dadurch nicht erkannt werden. Die Bildung der Prüfsummen wird vorteilhafterweise jeweils mit einem Cyclic Redundancy Check (CRC) durchgeführt. Hierbei kann sowohl der normale CRC als auch die Variante des CRC mit angehängten Nullen bei der Prüfsummenbildung eingesetzt werden.

Zur Durchführung der beschriebenen Verfahrenschritte kann als Verarbeitungseinheit ein Mikrocontroller verwendet werden. Der CRC-Algorithmus kann alternativ auch hardware-technisch durch verschaltete Schieberegister realisiert werden.

Ein typischer Anwendungsbereich des Verfahrens ist die sicherheitsgerichtete Datenübertragung in einem industriellen Automatisierungssystem, bei dem die Nettodaten sicherheitsrelevante Daten sind.

Im Folgenden wird die Erfindung anhand der in den Figuren dargestellten Ausführungsbeispiele näher beschrieben und erläutert. Es zeigen:
- FIG 1: eine Prinzipskizze des Verfahrens zur sicherheitsgerichteten Datenübertragung und
- FIG 2: eine Darstellung eines Algorithmus zur Generierung eines Übertragungstelegramms aus zweikanalig vorliegenden Daten mit Hilfe eines einkanaligen Kommunikationstreibers.

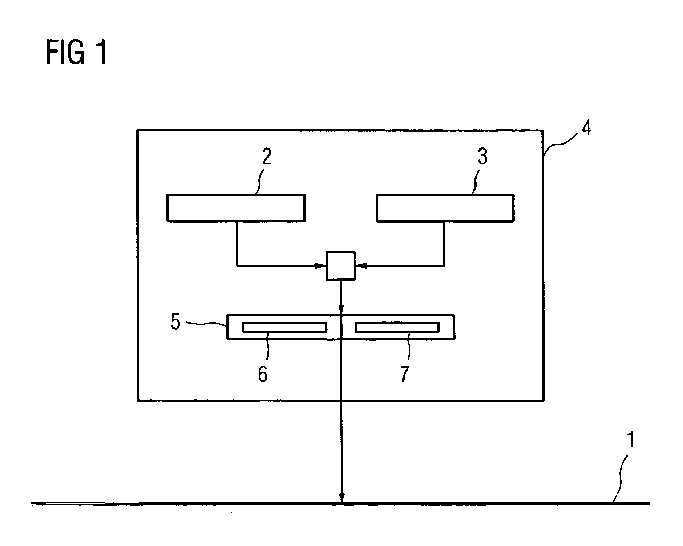

FIG 1 zeigt eine Prinzipskizze des Verfahrens zur sicherheitsgerichteten Datenübertragung über ein Bussystem 1. Innerhalb einer Verarbeitungseinheit 4 liegen die über das Bussystem zu sendenden Nettodaten zweikanalig in Form zweier sich in Ihrer Darstellungsart unterscheidender Datenmengen 2,3 vor. Hierbei kann es sich zum Beispiel einmal um eine normale Darstellung der Nettodaten handeln und einmal um eine invertierte Darstellung der Nettodaten. Die Datenmengen 2,3 werden beispielsweise von zwei Sensoren, welche die selbe Messgröße unabhängig von einander aufnehmen, erfasst und über getrennte Datenkanäle der Verarbeitungseinheit 4 zugeführt.

Die Verarbeitungseinheit 4 verknüpft die beiden Datenmengen 2,3 zu einem Übertragungstelegramm 5, das einkanalig über das Bussystem 1 gesendet wird. Hierzu werden die durch die erste Datenmenge 2 repräsentierten Nettodaten in einem ersten Datenbereich 6 des Übertragungstelegramms 5 abgelegt. Die Prüfsumme der Nettodaten wird hingegen anhand der zweiten Datenmenge 3, also der invertierten Nettodaten, bestimmt und in einem zweiten Datenbereich 7 des Übertragungstelegramms 5 abgelegt. Auf diese Weise sind bei der Generierung des Übertragungstelegramms 5 die Datenmengen 2,3 beider Kanäle beteiligt. Durch die unterschiedliche Darstellungsart der Nettodaten in den beide Kanälen kann der Kommunikationstreiber in einkanaliger Hardware, insbesondere unter Verwendung eines einzigen Mikrocontrollers, realisiert werden.

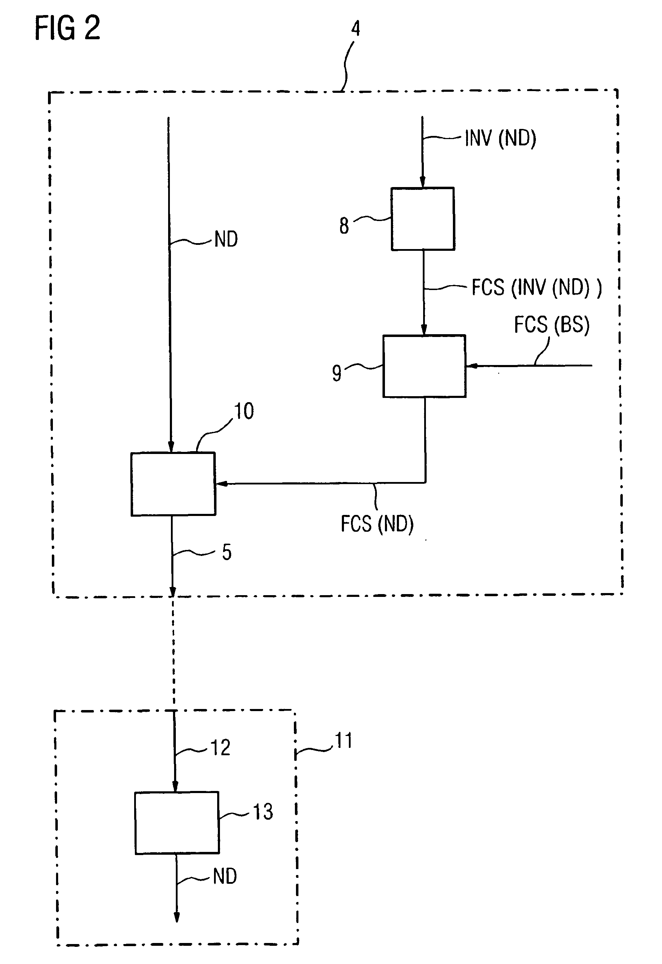

FIG 2 zeigt eine Darstellung eines Algorithmus zur Generierung eines Übertragungstelegramms 5 aus zweikanalig vorliegenden Daten mit Hilfe eines einkanaligen Kommunikationstreibers, wie er beispielsweise auf der Verarbeitungseinheit 4 realisiert wird. Die sicherheitsrelevanten Nettodaten liegen zum einen in normaler Form ND zum anderen auch in invertierter Form INV(ND) vor.

In einem ersten Verfahrensschritt 8 wird von den invertierten Nettodaten INV(ND) mit Hilfe eines Cyclic Redundancy Tests (CRC) eine Prüfsumme FCS(INV(ND)) bestimmt. Eine durch einen Cyclic Redundancy Test bestimmte Prüfsumme wird hier und bei der nachfolgenden Beschreibung mit FCS() (Frame Check Sequence) abgekürzt.

In einem zweiten Verfahrensschritt 9 wird eine Exklusiv-Oder Verknüpfung (XOR) der Prüfsumme der invertierten Nettodaten FCS(INV(ND)) und einer Prüfsumme FCS(BS) eines Bitstromes BS, in dem sämtliche Bits auf 1 gesetzt sind, durchgeführt. Die Länge des Bitstromes BS ist von der Länge der Nettodaten ND abhängig. Als Ergebnis der XOR-Verknüpfung 9 resultiert eine Prüfsumme der Nettodaten FCS(ND).

Zur Erzeugung der Prüfsumme der Nettodaten FCS(ND) aus den invertierten Nettodaten INV(ND) wird somit keine Inversion der invertierten Nettodaten INV(ND) durchgeführt. Ein solcher Verfahrenschritt würde bewirken, dass eine Zeit lang die Daten beider Kanäle in der gleichen Darstellungsform in der Verarbeitungseinrichtung 4 vorlägen und somit die Gefahr unerkannter Speicher- oder Abarbeitungsfehler bestehen würde.

In einem dritten Verarbeitungsschritt 10 wird die aus den invertierten Nettodaten INV(ND) generierte Prüfsumme FCS(ND) an die Nettodaten ND angehängt, um ein Übertragungstelegramm 5 zu generieren. Das Übertragungstelegramm 5 wird über das Bussystem 1 übertragen.

Ein Empfänger 11 empfängt ein zweites Übertragungstelegramm 12, welches bei einer fehlerfreien Übertragung über das Bussystem 1 dem Übertragungstelegramm 5 entspricht. In einem vierten Verarbeitungsschritt 13 bildet der Empfänger eine Prüfsumme der im Übertragungstelegramm 12 abgelegten Nettodaten und vergleicht diese mit der im Übertragungstelegramm 12 abgelegten Prüfsumme. Bei einer Übereinstimmung beider Prüfsummen kann der Empfänger davon ausgehen, dass die Daten über den Bus fehlerfrei übertragen wurden. Des weiteren signalisiert die Übereinstimmung der Prüfsummen, dass sowohl durch die Nettodaten ND als auch durch die invertierten Nettodaten INV(ND) die zu übertragenden sicherheitsrelevanten Daten korrekt beschrieben wurden.

Zusammenfassend betrifft die Erfindung ein Verfahren und ein System zur einkanaligen Übertragung von Informationen auf einem Bussystem 1 innerhalb eines Automatisierungssystems, mit dem eine dem Sicherheitslevel 2 nach IEC 618508 genügende Datenübertragung mit reduziertem Hardwareaufwand erreicht wird.

Die über das Bussystem 1 zu übertragenden Informationen beinhalten Nettodaten, die zweikanalig in Form einer ersten Datenmenge 2 und in Form einer zweiten, zumindest in der Darstellungsform von der ersten Datenmenge 2 verschiedenartigen Datenmenge 3 innerhalb einer Verarbeitungseinheit 4 vorliegen. Die Verarbeitungseinheit generiert aus beiden Datenmengen 2,3 ein für eine einkanalige Übertragung auf dem Bussystem 1 geeignetes Übertragungstelegramm 5, wobei
- in einem ersten Datenbereich 6 des Übertragungstelegramms 5 die in Form der ersten Datenmenge 2 vorliegenden Nettodaten abgelegt werden und
- in einem zweiten Datenbereich 7 des Übertragungstelegramms 5 eine auf Basis der zweiten Datenmenge 3 generierte Prüfsumme abgelegt wird.

## Patentansprüche

1. Verfahren zur Übertragung von Informationen auf einem Bussystem (1) innerhalb eines Automatisierungssystems, wobei die über das Bussystem (1) zu übertragenden Informationen Nettodaten beinhalten, die zweikanalig in Form einer ersten Datenmenge (2) und in Form einer zweiten, zumindest in der Darstellungsform von der ersten Datenmenge (2) verschiedenartigen Datenmenge (3) innerhalb einer Verarbeitungseinheit (4) vorliegen und die Verarbeitungseinheit (4) aus beiden Datenmengen (2,3) ein für eine einkanalige Übertragung auf dem Bussystem (1) geeignetes Übertragungstelegramm (5) generiert,
wobei folgende Verfahrensschritte ausgeführt werden:
- Ablegen der in Form der ersten Datenmenge (2) vorliegenden Nettodaten in einem ersten Datenbereich (6) des Übertragungstelegramms (5) und
- Ablegen einer auf Basis der zweiten Datenmenge (3) generierten Prüfsumme in einem zweiten Datenbereich (7) des Übertragungstelegramms (5),
wobei eine der beiden Datenmengen (2,3) einer bitweise invertierten Darstellung der Nettodaten entspricht und die Prüfsumme durch folgende Verfahrensschritte erzeugt wird:
- Bilden einer zweiten Prüfsumme von den invertierten Nettodaten,
- Bestimmen der Länge eines Bitstrom, in dem alle Bits auf 1 gesetzt sind, in Abhängigkeit der Nettodaten und
- Exklusiv-Oder Verknüpfung der zweiten Prüfsumme mit einer Prüfsumme des Bitstroms.

2. Verfahren nach Anspruch 1,
**dadurch gekennzeichnet, dass** die Bildung der Prüfsummen jeweils mit einem Cyclic Redundancy Check durchgeführt wird.

3. Verfahren nach einem der Ansprüche 1 oder 2,
**dadurch gekennzeichnet, dass** als Verarbeitungseinheit (4) ein Mikrocontroller verwendet wird.

4. Verfahren nach einem der Ansprüche 1 bis 3,
**dadurch gekennzeichnet, dass** das Verfahren zur sicherheitsgerichteten Datenübertragung in einem industriellen Automatisierungssystem eingesetzt wird, bei dem die Nettodaten sicherheitsrelevante Daten sind.

5. System zur Übertragung von Informationen innerhalb eines Automatisierungssystems, welches ein Bussystem (1) und eine Verarbeitungseinheit (4) aufweist, wobei die Verarbeitungseinheit (4) zur Generierung eines für eine einkanalige Übertragung auf dem Bussystem (1) geeigneten Übertragungstelegramms (5) aus einer ersten Datenmenge (2) und einer zweiten Datenmenge (3) ausgebildet ist, wobei die zu übertragenden Informationen Nettodaten beinhalten, die zweikanalig in Form der ersten Datenmenge (2) und in Form der zweiten, zumindest in der Darstellungsform von der ersten Datenmenge (2) verschiedenartigen Datenmenge (3) innerhalb der Verarbeitungseinheit (4) vorliegen, wobei die Verarbeitungseinheit dazu ausgelegt ist, dass
- in einem ersten Datenbereich (6) des Übertragungstelegramms (5) die in Form der ersten Datenmenge (2) vorliegenden Nettodaten abzulesen und
- in einem zweiten Datenbereich (7) des Übertragungstelegramms (5) eine auf Basis der zweiten Datenmenge (3) generierte Prüfsumme abzulesen,
wobei die Verarbeitungseinheit (4) zur Bildung der im zweiten Datenbereich abgelegten Prüfsumme ausgebildet ist, wobei eine der beiden Datenmengen (2,3) einer bitweise invertierten Darstellung der Nettodaten entspricht und die Prüfsumme **dadurch** erzeugt wird, dass von den invertierten Nettodaten eine zweite Prüfsumme gebildet wird und diese mit einer Prüfsumme eines Bitstrom, in dem alle Bits auf 1 gesetzt sind und dessen Länge in Abhängigkeit der Nettodaten bestimmt wird, Exklusiv-Oder verknüpft wird.

6. System nach Anspruch 5,
**dadurch gekennzeichnet, dass** die Verarbeitungseinheit (4) zur Bildung der Prüfsummen mit jeweils einem Cyclic Redundancy Check ausgebildet ist.

7. System nach einem der Ansprüche 5 oder 6,
**dadurch gekennzeichnet, dass** die Verarbeitungseinheit (4) als Mikrocontroller ausgeführt ist.

8. System nach einem der Ansprüche 5 bis 7,
**dadurch gekennzeichnet, dass** das System zur sicherheitsgerichteten Datenübertragung in einem industriellen Automatisierungssystem vorgesehen ist, bei dem die Nettodaten sicherheitsrelevante Daten sind.

## Claims

1. Method for the transmission of information on a bus system (1) within an automation system, the information to be transmitted via the bus system (1) containing net data which is present within a processing unit (4) in two channels in the form of a first data set (2) and in the form of a second data set (3) that differs from the first data set (2) at least in the form of representation, and the processing unit (4) generates a transmission telegram (5) suitable for one-channel transmission on the bus system (1) from the two data sets (2,3), whereby the following method steps are implemented:
- the net data present in the form of the first data set (2) is stored in a first data area (6) of the transmission telegram (5) and
- a checksum generated on the basis of the second data set (3) is stored in a second data area (7) of the transmission telegram (5)
whereby one of the two data sets (2,3) corresponds to a bit-inverted representation of the net data and the checksum is generated by the following methods steps:
- creating a second checksum from the inverted net data,
- determining the length of a bit stream in which all bits are set to 1, as a function of the net data and
- exclusively OR linking the second checksum to a check sum of the bit stream.

2. Method according to claim 1,
**characterised in that** the checksums are each created with a Cyclic Redundancy Check.

3. Method according to one of claims 1 to 2,
**characterised in that** a microcontroller is used as the processing unit (4).

4. Method according to one of claims 1 to 3,
**characterised in that** the method for failsafe data transmission is used in an industrial automation system, in which the net data is safety-relevant data.

5. System for the transmission of information within an automation system, having a bus system (1) and a processing unit (4), the processing unit (4) serving to generate a transmission telegram (5) suitable for one-channel transmission on the bus system (1) from a first data set (2) and a second data set (3), the information to be transmitted containing net data, which is present within a processing unit (4) in two channels in the form of the first data set (2) and in the form of the second data set (3) that differs from the first data set (2) at least in the form of representation, whereby the processing unit is designed to
- store the net data present in the form of the first data set (2) in a first data area (6) of the transmission telegram (5)
- store a checksum generated on the basis of the second data set (3) in a second data area (7) of the transmission telegram (5)
whereby the processing unit (4) serves to create the checksum stored in the second data area, one of the two data sets (2,3) corresponding to a bit-inverted representation of the net data and the checksum being generated by creating a second checksum from the inverted net data and linking this by means of an exclusive-OR operation to a checksum of a bit stream, in which all the bits are set to 1 and the length of which is defined as a function of the net data.

6. System according to claim 5,
**characterised in that** the processing unit (4) serves to create the checksums with a Cyclic Redundancy Check in each instance.

7. System according to one of claims 5 to 6,
**characterised in that** the processing unit (4) is configured as a microcontroller.

8. System according to one of claims 5 to 7,
**characterised in that** the system for failsafe data transmission is provided in an industrial automation system, in which the net data is safety-relevant data.

## Revendications

1. Procédé de transmission d' informations sur un système de bus (1) à l' intérieur d' un système d' automatisation , les informations à transmettre par 1' intermédiaire du système de bus (1) contenant des données nettes qui sont présentes sur deux canaux sous la forme d' un premier ensemble de données (2) et sous la forme d' un deuxième ensemble de données (3) , d' un type différent de celui du premier ensemble de données (2) au moins pour ce qui est de la forme de représentation , à l'intérieur d' une unité de traitement (4) et l'unité de traitement (4) produisant à partir des deux ensembles de données (2 , 3) un télégramme de transmission (5) convenant à une transmission à un seul canal sur le système de bus (1) , les étapes de procédé ci-dessous étant exécutées :
- enregistrement des données nettes présentes sous la forme du premier ensemble de données (2) dans une première zone de données (6) du télégramme de transmission (5) et
- enregistrement d' une somme de contrôle , produite sur la base du deuxième ensemble de données (3) , dans une deuxième zone de données (7) du télégramme de données (5) ,
l' un des deux ensembles de données (2 , 3) correspondant à une représentation inversée bit à bit des données nettes et la somme de contrôle étant produite par les étapes de procédé suivantes :
- formation d' une deuxième somme de contrôle des données nettes inversées ,
- détermination de la longueur d' un flux binaire, dans lequel tous les bits sont mis à 1 , en fonction des données nettes et
- combinaison OU-EXCLUSIF de la deuxième somme de contrôle avec une somme de contrôle du flux binaire

2. Procédé selon la revendication 1,
**caractérisé par le fait que** la formation des sommes de contrôle est effectuée à chaque fois avec un contrôle de redondance cyclique.

3. Procédé selon l'une des revendications 1 ou 2,
**caractérisé par le fait qu'** un microcontrôleur est utilisé comme unité de traitement (4) .

4. Procédé selon l'une des revendications 1 à 3,
**caractérisé par le fait que** le procédé est utilisé pour la transmission de données sécurisée dans un système d'automatisation industriel , les données nettes étant des données déterminantes pour la sécurité.

5. Système pour la transmission d' informations à l'intérieur d' un système d' automatisation , qui comporte un système de bus (1) et une unité de traitement (4) , dans lequel l'unité de traitement (4) est conçue pour la production d' un télégramme de transmission (5) convenant à une transmission à un seul canal sur le système de bus (1) à partir d' un premier ensemble de données (2) et d' un deuxième ensemble de données (3) , dans lequel les informations à transmettre contiennent des données nettes qui sont présentes sur deux canaux sous la forme du premier ensemble de données (2) et sous la forme du deuxième ensemble de données (3) , d' un type différent de celui du premier ensemble de données (2) au moins pour ce qui est de la forme de représentation, à l'intérieur d' une unité de traitement (4), dans lequel l'unité de traitement est conçue pour
- enregistrer les données nettes présentes sous la forme du premier ensemble de données (2) dans une première zone de données (6) du télégramme de transmission (5) et
- enregistrer une somme de contrôle , produite sur la base du deuxième ensemble de données (3) , dans une deuxième zone de données (7) du télégramme de données (5) ,
l'unité de traitement (4) étant conçue pour la formation de la somme de contrôle enregistrée dans la deuxième zone de données , l'un des deux ensembles de données (2 , 3) correspondant à une représentation inversée bit à bit des données nettes et la somme de contrôle étant produite par le fait qu' une deuxième somme de contrôle des données nettes inversées est formée et est soumise à une combinaison OU-EXCLUSIF avec une somme de contrôle d' un flux binaire dans lequel tous les bits sont mis à 1 et dont la longueur est déterminée en fonction des données nettes.

6. Système selon la revendication 5,
**caractérisé par le fait que** l'unité de traitement (4) est conçue pour la formation des sommes de contrôle à chaque fois avec un contrôle de redondance cyclique.

7. Système selon l'une des revendications 5 ou 6 ,
**caractérisé par le fait que** l'unité de traitement (4) est réalisée comme un microcontrôleur .

8. Système selon l' une des revendications 5 à 7 ,
**caractérisé par le fait que** le système est prévu pour la transmission de données sécurisée dans un système d'automatisation industriel , les données nettes étant des données déterminantes pour la sécurité.
